# EUROPEAN PATENT SPECIFICATION

(11) **EP 4 517 411 B1**
(45) Date of publication and mention of the grant of the patent: **09.12.2026**
(21) Application number: 23796202.2
(22) Date of filing: 19.04.2023
(51) Int. Cl.: G02F 1/1339, G02F 1/13, G02F 1/1334, G02F 1/1345

(54) **LIGHT CONTROL SHEET**
LICHTSTEUERFOLIE
FEUILLE DE COMMANDE DE LUMIÈRE

(30) Priority: 27.04.2022 JP 2022073170
(43) Date of publication of application: 05.03.2025
(73) Proprietor: Toppan Holdings Inc., Tokyo 110-0016 (JP)
(72) Inventor: SHIRAISHI, Ryuji, Tokyo 110-0016 (JP); OONISHI, Takashi, Tokyo 110-0016 (JP)
(74) Representative: TBK
(86) International application number: PCT/JP2023/015593
(87) International publication number: WO 2023/210460

(56) References cited:
- JP-A- 2005 529 361
- JP-A- 2016 509 264
- JP-A- 2019 159 139
- JP-A- 2019 159 139
- US-A1- 2005 146 774
- US-A1- 2022 082 881

## Description

### Technical Field

The present disclosure relates to a light control sheet including a light control layer between a first electrode sheet and a second electrode sheet.

### Background Art

A light control sheet includes a pair of electrode sheets and a light control layer that is positioned between the pair of electrode sheets. Each of the electrode sheets includes an insulating transparent substrate and an electrically conductive transparent electrode layer. The light control layer is positioned between the transparent electrode layers of the two electrode sheets. The light control layer includes a liquid crystal composition including liquid crystal molecules. The liquid crystal molecules exhibit different alignments between a state where there is no potential difference between the pair of transparent electrode layers and a state having a potential difference between the pair of transparent electrode layers. For example, the light control sheet exhibits opacity by using the alignment of the liquid crystal molecules with no potential difference between the pair of transparent electrode layers and exhibits transparency by using the alignment of the liquid crystal molecules with a potential difference between the pair of transparent electrode layers.

To suppress the deterioration of the liquid crystal composition in the light control sheet by acid, moisture, ultraviolet rays, or the like, it is preferable to cover an end face of the light control layer with an insulating sealing section. The sealing section is positioned to cover the end face of the light control sheet including the end face of the light control layer and extend up onto the surface of the outermost layer in the thickness direction in which the respective layers included in the light control sheet are laminated (e.g., PTL 1).

Further, a light control sheet according to the preamble of claims 1 and 5 is known from US 2005/146774 A1. Further light control sheets are known from JP 2019 159139 A and US 2022/082881 A1.

### Citation List

### Patent Literature

PTL 1: JP 2019-3034 A

### Summary of the Invention

### Technical Problem

Incidentally, a variety of adherend layers are bonded to an electrode sheet in a light control sheet in some cases. Examples of the adherend layers include a hard coat layer for a purpose of protecting the light control sheet, an ultraviolet shielding layer for a purpose of blocking an ultraviolet ray, an infrared shielding layer for a purpose of blocking an infrared ray, and the like. An adherend layer or an adhesive that bonds the adherend layer and a transparent electrode substrate sometimes includes moisture, acid, or the like that causes the light control layer to deteriorate. In a case where a sealing section is provided in the light control sheet over the surface of the adherend layer positioned as the outermost layer in the thickness direction and an end face of the light control layer, the sealing section makes it difficult to externally release moisture or acid generated from the adherend layer or the adhesive. Therefore, in a case where the end face of the light control layer and the end face of the adherend layer have short distance therebetween, the moisture or the acid generated from the adherend layer or the adhesive makes the light control layer more likely to deteriorate.

The object of the present disclosure is to provide a light control sheet that limits deterioration.

### Solution to Problem

The above object is solved with a light control sheet having the features of claims 1 and 5. Further advantageous developments are laid down in the dependent claims.

There is provided a light control sheet. The light control sheet includes: a first electrode sheet; a second electrode sheet; a light control layer; and an adherend layer. The first electrode sheet includes a first transparent substrate and a first transparent electrode layer. The first transparent substrate has a first surface in contact with the first transparent electrode layer and a second surface opposite to the first surface. The second electrode sheet includes a second transparent substrate and a second transparent electrode layer. The light control layer is positioned between the first transparent electrode layer and the second transparent electrode layer. The adherend layer is bonded to the second surface of the first transparent substrate. In plan view from a viewpoint facing the light control sheet, a substrate surface that is part of the second surface of the first transparent substrate is exposed from the adherend layer, the second transparent electrode layer has a first surface in contact with the light control layer, and an electrode surface that is part of the first surface of the second transparent electrode layer is exposed from the first transparent substrate and exposed from the light control layer, and a sealing section is provided to cover the electrode surface, an end face of the light control layer, the substrate surface, and an end face of the adherend layer in an edge section of the light control sheet.

Alternatively, there is provided a light control sheet. The light control sheet includes: a first electrode sheet; a second electrode sheet; a light control layer; and an adherend layer. The first electrode sheet includes a first transparent substrate and a first transparent electrode layer. The first transparent substrate has a first surface in contact with the first transparent electrode layer and a second surface opposite to the first surface. The second electrode sheet includes a second transparent substrate and a second transparent electrode layer. The light control layer is positioned between the first transparent electrode layer and the second transparent electrode layer. The adherend layer is bonded to the second surface of the first transparent substrate. In plan view from a viewpoint facing the light control sheet, a substrate surface that is part of the second surface of the first transparent substrate is exposed from the adherend layer, the second transparent electrode layer has a first surface in contact with the light control layer, and an electrode surface that is part of the first surface of the second transparent electrode layer is exposed from the first transparent substrate and exposed from the light control layer, and the substrate surface and the electrode surface extend along a first direction in an edge section of the light control sheet, and a width of the substrate surface in a second direction orthogonal to the first direction is greater than or equal to 0.1 mm.

### Brief Description of the Drawings

[Fig. 1] Fig. 1 is a plan view of a light control sheet.
[Fig. 2] Fig. 2 is a plan view of the light control sheet shown from an opposite side to Fig. 1.
[Fig. 3] Fig. 3 is a cross-sectional view of the light control sheet taken along a line III-III in Fig. 1.
[Fig. 4] Fig. 4 is a cross-sectional view of a configuration according to a comparative example 1.
[Fig. 5] Fig. 5 is a cross-sectional view of a configuration according to a comparative example 2.
[Fig. 6] Fig. 6 is a cross-sectional view of a configuration according to a comparative example 3.
[Fig. 7] Fig. 7 is a cross-sectional view of the light control sheet taken along a line VII-VII in Fig. 1.
[Fig. 8] Fig. 8 is a cross-sectional view of the light control sheet taken along a line VIII-VIII in Fig. 1.
[Fig. 9] Fig. 9 is an enlarged plan view of an edge section of the light control sheet.
[Fig. 10] Fig. 10 is an enlarged plan view of a configuration in which a first side and a second side cross each other on an end face of a first adherend layer.
[Fig. 11] Fig. 11 is an enlarged plan view of a configuration in which the first side and the second side are positioned apart from each other on the end face of the first adherend layer.
[Fig. 12] Fig. 12 is an enlarged plan view of the edge section of the light control sheet from an opposite side to the light control sheet in Fig. 9.
[Fig. 13] Fig. 13 is a cross-sectional view of a modification example of a shape illustrated in Fig. 3.
[Fig. 14] Fig. 14 is a cross-sectional view of a modification example of the shape illustrated in Fig. 3.
[Fig. 15] Fig. 15 is a cross-sectional view of a modification example of the shape illustrated in Fig. 3.
[Fig. 16] Fig. 16 is a cross-sectional view of a modification example of the shape illustrated in Fig. 3.
[Fig. 17] Fig. 17 is a cross-sectional view of a modification example of the shape illustrated in Fig. 3.
[Fig. 18] Fig. 18 is a cross-sectional view of a modification example of the shape illustrated in Fig. 3.

### Description of the Embodiments

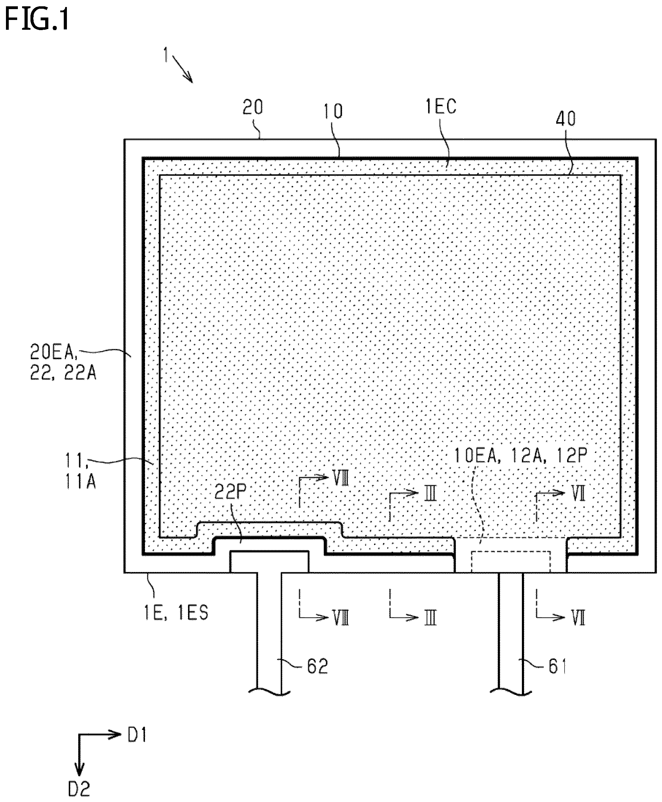

An embodiment of a light control sheet will be described below with reference to Figs. 1 to 18.

### [Planar Structure of Light Control Sheet]

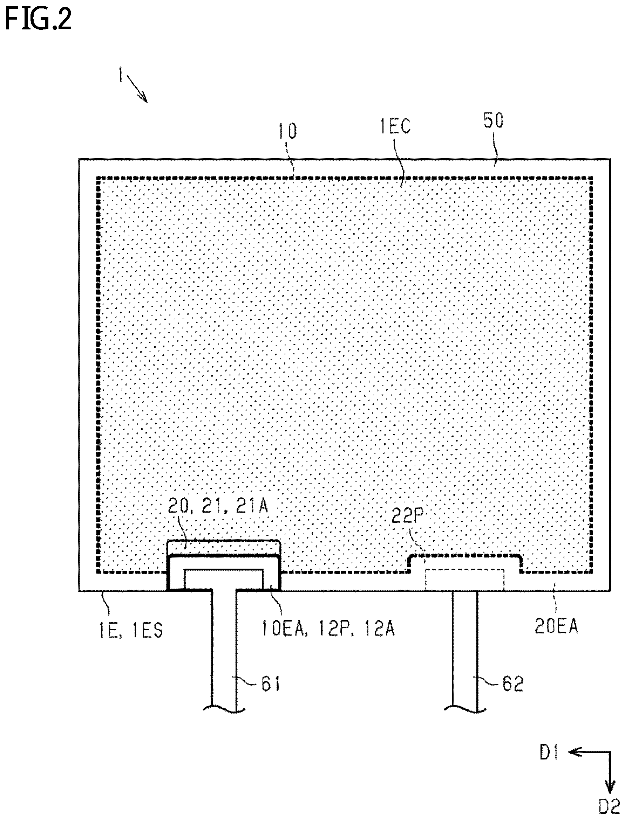

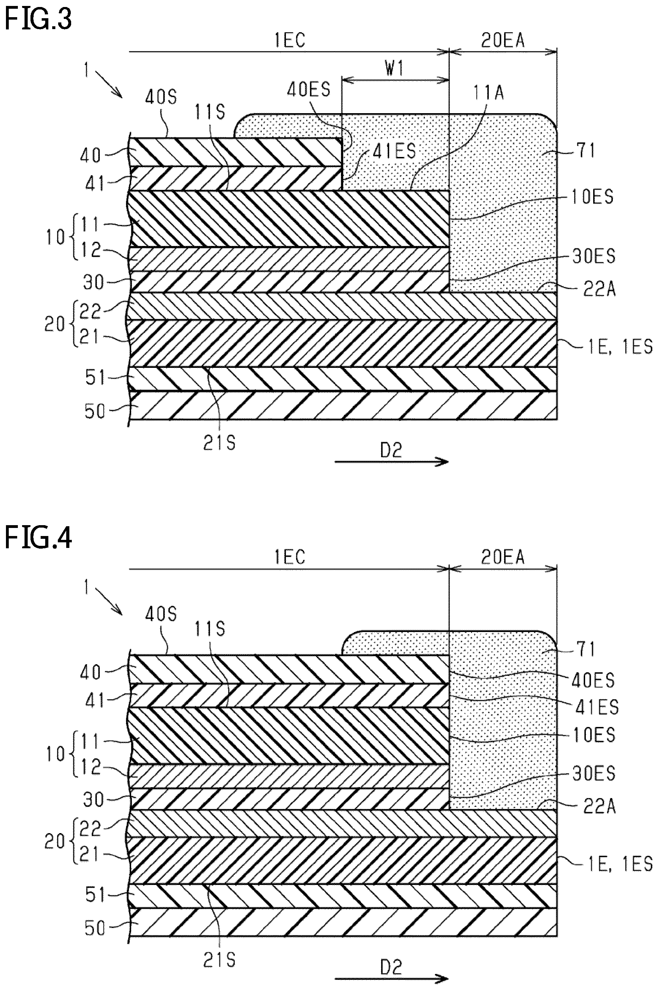

As illustrated in Fig. 1, a light control sheet 1 includes a first electrode sheet 10 and a second electrode sheet 20 each having light transmissivity. The first electrode sheet 10 is positioned in the foreground of the diagram with respect to the second electrode sheet 20. The second electrode sheet 20 is positioned in the background of the diagram with respect to the first electrode sheet 10. It is to be noted that the first electrode sheet 10 is illustrated by a thick line and the second electrode sheet 20 is illustrated by a thin line in each of Figs. 1 and 2 for the sake of convenience of the description of the relative positions of the first electrode sheet 10 and the second electrode sheet 20. In addition, Figs. 1 and 2 each omit a first sealing section 71 and a second sealing section 72 illustrated in Figs. 3 to 8 and other diagrams for the sake of convenience of description.

The light control sheet 1 includes a driver section 1EC, a first non-driver section 10EA, and a second non-driver section 20EA in plan view from a viewpoint facing the light control sheet 1. It is to be noted that the position of the driver section 1EC is dotted in each of Figs. 1 and 2.

The driver section 1EC includes the first electrode sheet 10, the second electrode sheet 20, and a light control layer 30 (see Fig. 3) that is positioned between the first electrode sheet 10 and the second electrode sheet 20. The driver section 1EC is a portion of the light control sheet 1 at which the first electrode sheet 10, the second electrode sheet 20, and the light control layer 30 are overlaid. In other words, the portion at which the first electrode sheet 10, the second electrode sheet 20, and the light control layer 30 are overlaid forms the driver section 1EC. In the driver section 1EC, the application of a voltage between the first electrode sheet 10 and the second electrode sheet 20 changes the light control layer 30 in light transmittance.

In one example, the first non-driver section 10EA is a portion that includes the first electrode sheet 10 and does not include the second electrode sheet 20 and the light control layer 30. The first non-driver section 10EA has a first electrode surface 12A. The first electrode surface 12A is the portion of a first transparent electrode layer 12 (see Fig. 3) that is exposed from the second electrode sheet 20 and the light control layer 30. The first transparent electrode layer 12 is included in the first electrode sheet 10. The first electrode surface 12A faces the background of the diagram in Fig. 1.

In one example, the second non-driver section 20EA is a portion that includes the second electrode sheet 20 and does not include the first electrode sheet 10 and the light control layer 30. The second non-driver section 20EA has a second electrode surface 22A. The second electrode surface 22A is the portion of a second transparent electrode layer 22 that is exposed from the first electrode sheet 10 and the light control layer 30. The second transparent electrode layer 22 is included in the second electrode sheet 20. The second electrode surface 22A faces the foreground of the diagram in Fig. 1.

The second non-driver section 20EA is positioned on the whole of the outer peripheral section of the light control sheet 1 except for the first non-driver section 10EA. The driver section 1EC is framed by the first non-driver section 10EA and the second non-driver section 20EA in plan view from a viewpoint facing the light control sheet 1. An outer peripheral end face 1ES of the light control sheet 1 is formed by the first non-driver section 10EA or the second non-driver section 20EA. In the light control sheet 1, a voltage necessary to drive the driver section 1EC is applied through the first non-driver section 10EA and the second non-driver section 20EA. The first non-driver section 10EA is provided with the second sealing section 72 that is necessary to protect the light control layer 30. The second non-driver section 20EA is provided with the first sealing section 71 that is necessary to protect the light control layer 30.

The first electrode surface 12A of the first non-driver section 10EA includes a first terminal 12P. A first external wiring line 61 is connected to the first terminal 12P. The first external wiring line 61 applies a voltage to the first electrode sheet 10 positioned in the driver section 1EC through the first terminal 12P.

The second electrode surface 22A of the second non-driver section 20EA includes a second terminal 22P. A second external wiring line 62 is connected to the second terminal 22P. The second external wiring line 62 applies a voltage to the second electrode sheet 20 positioned in the driver section 1EC through the second terminal 22P.

The light control sheet 1 includes an edge section 1E extending in a first direction D1 on the outer periphery. The first terminal 12P and the second terminal 22P are arranged side by side along the first direction D1 in the edge section 1E. In one example, the second terminal 22P has greater width in a second direction D2 than that of another portion of the second non-driver section 20EA positioned in the edge section 1E. The second direction D2 is a direction crossing the first direction D1. In one example, the second direction D2 is a direction orthogonal to the first direction D1.

The light control sheet 1 includes a first adherend layer 40. The first adherend layer 40 is positioned on the opposite side to the light control layer 30 with respect to the first electrode sheet 10. In one example, the first adherend layer 40 is positioned further inside the light control sheet 1 than the outer peripheral end of the first electrode sheet 10 is in the driver section 1EC and positioned to overlap with the first non-driver section 10EA.

The first adherend layer 40 defines, in a first transparent substrate 11 included in the first electrode sheet 10, a first substrate surface 11A on which the first transparent substrate 11 is exposed from the first adherend layer 40. In other words, in plan view from a viewpoint facing the light control sheet 1, the end face of the first adherend layer 40 forms the boundary between the first adherend layer 40 and the first substrate surface 11A of the first transparent substrate 11. The first substrate surface 11A is positioned between the second non-driver section 20EA and the first adherend layer 40 along the end face of the first electrode sheet 10 that defines the second non-driver section 20EA.

In plan view from a viewpoint facing the light control sheet 1, the first substrate surface 11A and the second electrode surface 22A extend in the edge section 1E along the first direction D1 and are arranged side by side in the second direction D2. In addition, in an edge section other than the edge section 1E in the light control sheet 1, the first substrate surface 11A and the second electrode surface 22A extend along the direction in which the edge section extends. In plan view from a viewpoint facing the light control sheet 1, the second electrode surface 22A is positioned closer to the outside of the light control sheet 1 than the first substrate surface 11A is. In other words, when the first substrate surface 11A and the second electrode surface 22A are compared, the second electrode surface 22A is positioned closer to the outside of the light control sheet 1 than the first substrate surface 11A is.

As illustrated in Fig. 2, the light control sheet 1 includes a second adherend layer 50. The second adherend layer 50 is positioned on the opposite side to the light control layer 30 with respect to the second electrode sheet 20. In one example, the second adherend layer 50 is positioned to be overlaid on substantially the whole of the second electrode sheet 20 except for the boundary between the second electrode sheet 20 and the first non-driver section 10EA.

The second adherend layer 50 defines, in a second transparent substrate 21 included in the second electrode sheet 20, a second substrate surface 21A on which the second transparent substrate 21 is exposed from the second adherend layer 50. The second substrate surface 21A is positioned between the first non-driver section 10EA and the second adherend layer 50 along the end face of the second electrode sheet 20 that defines the first non-driver section 10EA.

In plan view from a viewpoint facing the light control sheet 1, the second substrate surface 21A and the first electrode surface 12A extend in the edge section 1E along the first direction D1 and are arranged side by side in the second direction D2. In plan view from a viewpoint facing the light control sheet 1, the first electrode surface 12A is positioned closer to the outside of the light control sheet 1 than the second substrate surface 21A is. In other words, when the second substrate surface 21A and the first electrode surface 12A are compared, the first electrode surface 12A is positioned closer to the outside of the light control sheet 1 than the second substrate surface 21A is.

### [Cross-sectional Structure of Light Control Sheet]

As illustrated in Fig. 3, the light control sheet 1 is a stacked body formed by stacking the first electrode sheet 10, the second electrode sheet 20, the light control layer 30, the first adherend layer 40, and the second adherend layer 50 in the thickness direction of each layer. It is to be noted that each of Figs. 3 to 8 schematically illustrates the thickness of each of the layers that form the light control sheet 1.

The first electrode sheet 10 includes the first transparent substrate 11 and the first transparent electrode layer 12. The second electrode sheet 20 includes the second transparent substrate 21 and the second transparent electrode layer 22. The light control layer 30 is positioned between the first transparent electrode layer 12 and the second transparent electrode layer 22.

The first transparent substrate 11 and the second transparent substrate 21 each have light transmissivity to transmit visible light and each have electrically insulating properties. Materials that form the first transparent substrate 11 and the second transparent substrate 21 are organic polymer compounds or inorganic polymer compounds. Each of the organic polymer compounds is, for example, at least one selected from the group of polyesters, polyacrylates, polycarbonates, and polyolefins. Each of the inorganic polymer compounds is, for example, at least one selected from the group of silicon dioxide, silicon oxynitride, and silicon nitride.

The first transparent electrode layer 12 and the second transparent electrode layer 22 each have light transmissivity to transmit visible light and each have electrical conductivity. Each of materials that form the first transparent electrode layer 12 and the second transparent electrode layer 22 is, for example, at least one selected from the group of indium tin oxide, fluorine-doped tin oxide, tin oxide, zinc oxide, carbon nanotubes, and poly 3,4-ethylenedioxythiophene. The thicknesses of the first electrode sheet 10 and the second electrode sheet 20 are, for example, 50 µm or more and 200 µm or less.

The light control layer 30 has light transmittance that differs before and after the application of a voltage. An example of the light control layer 30 includes a transparent organic polymer layer and a liquid crystal composition. The transparent organic polymer layer defines a void between the first transparent electrode layer 12 and the second transparent electrode layer 22. The void of the transparent organic polymer layer is filled with the liquid crystal composition. The liquid crystal composition includes a liquid crystal compound. The liquid crystal compound is, for example, at least one selected from the group of a Schiff base compound, an azo-based compound, an azoxy-based compound, a biphenyl-based compound, a terphenyl-based compound, a benzoic-acid-ester-based compound, a tolan-based compound, a pyrimidine-based compound, a cyclohexanecarboxylic-acid-ester-based compound, a phenylcyclohexane-based compound, and a dioxane-based compound.

The type in which the transparent organic polymer layer holds a liquid crystal composition is, for example, at least one selected from the group consisting of a polymer network type, a polymer dispersion type, and a capsule type. In the polymer network type, the transparent organic polymer layer includes a transparent polymer network having a three-dimensional mesh shape and holds a liquid crystal composition in mesh-shaped voids that communicate with each other. In the polymer dispersion type, the transparent organic polymer layer has a large number of isolated voids therein. Liquid crystal compositions are held in the voids dispersed in the transparent organic polymer layer. In the capsule type, an encapsulated liquid crystal composition is held in the transparent organic polymer layer. It is to be noted that the liquid crystal composition may contain a monomer and a dichroic dye for forming the transparent organic polymer layer in addition to the liquid crystal compounds described above. The thickness of the light control layer 30 is, for example, 4 µm or more and 30 µm or less.

The first transparent substrate 11 has a first adhering surface 11S to which the first adherend layer 40 is bonded. The first adhering surface 11S is the opposite surface (second surface) to the surface (first surface) in contact with the first transparent electrode layer 12 among the surfaces of the first transparent substrate 11. The first adherend layer 40 is bonded to the first adhering surface 11S with a first adhesive layer 41 in between. The second transparent substrate 21 has a second adhering surface 21S to which the second adherend layer 50 is bonded. The second adhering surface 21S is the opposite surface (second surface) to the surface (first surface) in contact with the second transparent electrode layer 22 among the surfaces of the second transparent substrate 21. The second adherend layer 50 is bonded to the second adhering surface 21S with a second adhesive layer 51 in between.

In one example, the first adherend layer 40 and the second adherend layer 50 are hard coat layers. A hard coat layer has light transmissivity and has higher mechanical strength than those of the first transparent substrate 11 and the second transparent substrate 21. A hard coat layer may be formed by using, for example, any of an organic-based material, a silicon-based material including silicon, and an inorganic-based material. The organic-based material is a synthetic resin. For example, the organic-based material may be any of a melamine-based resin, a urethane-based resin, and an acryl-based resin. The silicon-based material may be a silane compound such as a silicone-based hard coat material. It is to be noted that silicone refers to a compound obtained by purifying silicon (silicon). The inorganic-based material may be metal oxide.

It is to be noted that the first adherend layer 40 and the second adherend layer 50 are not each limited to a hard coat layer. The first adherend layer 40 and the second adherend layer 50 may be a variety of functional layers such as ultraviolet absorbing layers that each block ultraviolet rays or infrared absorbing layers that each block infrared rays. In addition, the first adherend layer 40 and the second adherend layer 50 are not each limited to a monolayer structure. The first adherend layer 40 and the second adherend layer 50 may each have a multilayer structure. In a case where the first adherend layer 40 and the second adherend layer 50 each have a multilayer structure, the first adherend layer 40 and the second adherend layer 50 may each include a first layer formed by using a first material and a second layer formed by using a second material that is different from the first material. The thicknesses of the first adherend layer 40 and the second adherend layer 50 are, for example, 10 µm or more and 100 µm or less.

In one example, each of the first adhesive layer 41 and the second adhesive layer 51 is at least one selected from the group of an acryl-based adhesive, an epoxy-based adhesive, a urethane-based adhesive, and a silicone-based adhesive.

The second non-driver section 20EA includes the second electrode sheet 20 and the second adherend layer 50. The second electrode surface 22A of the second non-driver section 20EA is a portion of the surface of the second transparent electrode layer 22 in contact with the light control layer 30. This portion is positioned closer to the outside of the light control sheet 1 than the first substrate surface 11A is, and exposed from the light control layer 30.

The first electrode sheet 10 has an end face 10ES that defines the second non-driver section 20EA. In one example, on the boundary between the second non-driver section 20EA and the driver section 1EC, the end face 10ES of the first electrode sheet 10 and an end face 30ES of the light control layer 30 form one end face. The first adherend layer 40 has an end face 40ES in the first adhering surface 11S. The end face 40ES defines the first substrate surface 11A. The end face 40ES of the first adherend layer 40 is an example of an end face for defining the first substrate surface. The end face 40ES of the first adherend layer 40 and an end face 41ES of the first adhesive layer 41 form one end face.

In one example, it is preferable that width W1 of the first substrate surface 11A in the second direction D2 be greater than or equal to 0.1 mm in the edge section 1E. It is to be noted that the width W1 corresponds to the distance between the end face 40ES of the first adherend layer 40 and the end face 10ES of the first electrode sheet 10 in the direction orthogonal to the direction in which the first substrate surface 11A extends.

In a cross section that is orthogonal to the first adhering surface 11S and includes the first substrate surface 11A and the second electrode surface 22A, the outer peripheral end face 1ES of the light control sheet 1 is formed by the second electrode sheet 20 and the second adherend layer 50 in one example. In the cross section, the end face 10ES of the first electrode sheet 10 and the end face 30ES of the light control layer 30 are positioned further inside the light control sheet 1 than the outer peripheral end face 1ES is. In the cross section, the end face 40ES of the first adherend layer 40 and the end face 41ES of the first adhesive layer 41 are positioned further inside the light control sheet 1 than the end face 10ES of the first electrode sheet 10 is.

The boundary between the driver section 1EC and the second non-driver section 20EA is provided with the first sealing section 71. The first sealing section 71 is a resin having insulating properties. In one example, the first sealing section 71 is formed by using an epoxy resin, an acryl-based resin, or the like. The first sealing section 71 covers the second electrode surface 22A, and the end face 10ES of the first electrode sheet 10 and the end face 30ES of the light control layer 30 in the driver section 1EC. The first sealing section 71 then covers the end face 40ES of the first adherend layer 40 and the end face 41ES of the first adhesive layer 41 to extend up onto the first substrate surface 11A. Further, the first sealing section 71 covers part of a first outer surface 40S of the first adherend layer 40 opposite to the surface in contact with the first adhesive layer 41. In other words, the first sealing section 71 is in contact with the second electrode surface 22A, the end face 10ES of the first electrode sheet 10, the end face 30ES of the light control layer 30, the first substrate surface 11A, the end face 40ES of the first adherend layer 40, the end face 41ES of the first adhesive layer 41, and the part of the first outer surface 40S in the driver section 1EC. The first sealing section 71 covers the end face 30ES of the light control layer 30 to prevent external leakage of the liquid crystal composition that forms the light control layer 30 from the end face 30ES and suppress the deterioration of the light control layer 30 by acid, moisture, ultraviolet rays, or the like from the outside.

Here, comparative examples 1 to 3 for describing advantages of the present embodiment will be illustrated in Figs. 4 to 6. Each of the comparative examples is different from the present embodiment in that the end face 10ES of the first electrode sheet 10, the end face 30ES of the light control layer 30, the end face 40ES of the first adherend layer 40, and the end face 41ES of the first adhesive layer 41 form one end face on the boundary between the driver section 1EC and the second non-driver section 20EA. In each of the comparative examples 1 to 3 illustrated in Figs. 4 to 6, the first substrate surface 11A is not thus formed at the position adjacent to the second non-driver section 20EA. In this case, the end face 40ES of the first adherend layer 40 and the end face 41ES of the first adhesive layer 41 are separated from the end face 30ES of the light control layer 30 by the thickness of the first electrode sheet 10.

In the comparative example 1 illustrated in Fig. 4, in the light control sheet 1 in which the first substrate surface 11A is not formed, the first sealing section 71 covers part of the first outer surface 40S. In this case, the first sealing section 71 makes it difficult to externally release moisture or acid generated from the first adherend layer 40 and the first adhesive layer 41. This makes the light control layer 30 more likely to deteriorate in a case where the thickness of the first electrode sheet 10 is small.

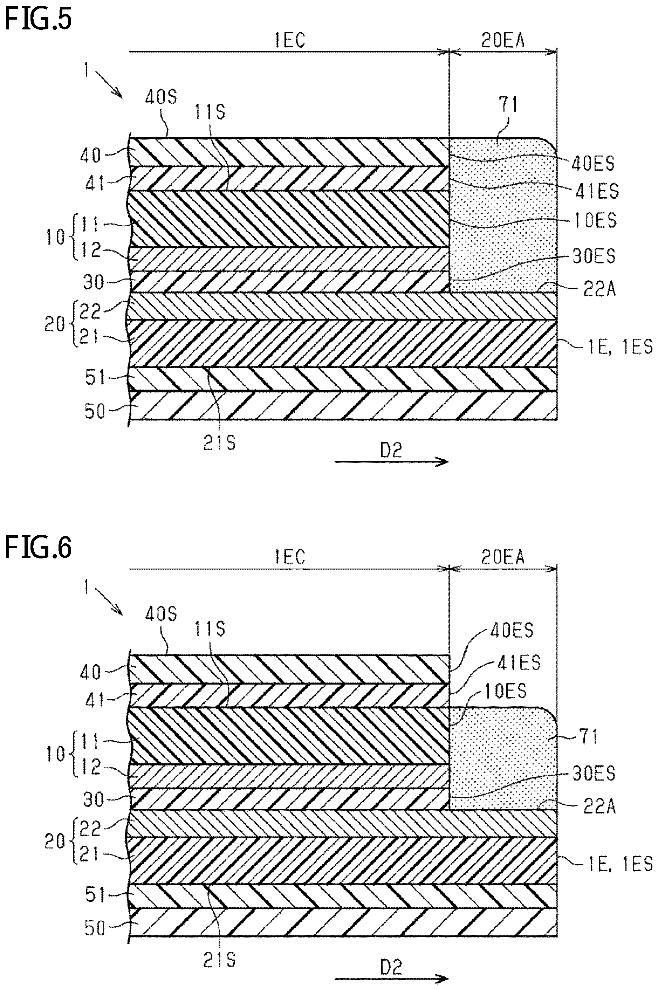

In the comparative example 2 illustrated in Fig. 5, in the light control sheet 1 in which the first substrate surface 11A is not formed, the first sealing section 71 covers the end face 40ES of the first adherend layer 40 and the end face 41ES of the first adhesive layer 41 and does not cover the first outer surface 40S. As in the comparative example 1, the light control layer 30 is also likely to deteriorate in this case due to moisture or acid generated from the first adherend layer 40 and the first adhesive layer 41. In addition, the first sealing section 71 does not reach the first outer surface 40S. This makes the first sealing section 71 easier to peel off on the boundary between the driver section 1EC and the second non-driver section 20EA than in the comparative example 1.

In the comparative example 3 illustrated in Fig. 6, in the light control sheet 1 in which the first substrate surface 11A is not formed, the first sealing section 71 does not cover the end face 40ES of the first adherend layer 40 and the end face 41ES of the first adhesive layer 41. In this case, moisture or acid generated from the first adherend layer 40 and the first adhesive layer 41 is easier to release externally. Meanwhile, the first sealing section 71 has small contact area with the light control sheet 1. The first sealing section 71 is thus easier to peel off on the boundary between the driver section 1EC and the second non-driver section 20EA than in the comparative examples 1 and 2.

In this regard, the first adherend layer 40 is disposed in the present embodiment to define the first substrate surface 11A in the first transparent substrate 11. This increases the distance between the end face 40ES of the first adherend layer 40 and the end face 41ES of the first adhesive layer 41, and the end face 30ES of the light control layer 30 by the width W1 of the first substrate surface 11A. Thus, even in a case where the first sealing section 71 is provided to cover the first substrate surface 11A, the end face 40ES of the first adherend layer 40, and the end face 41ES of the first adhesive layer 41, it is possible to suppress the deterioration of the light control layer 30 due to moisture or acid generated from the first adherend layer 40 and the first adhesive layer 41. If the width W1 of the first substrate surface 11A is greater than or equal to 0.1 mm, it is possible to more reliably suppress deterioration of the light control layer 30 due to moisture or acid generated from the first adherend layer 40 and the first adhesive layer 41.

Further, the first sealing section 71 covers the first substrate surface 11A, the end face 40ES of the first adherend layer 40, and the end face 41ES of the first adhesive layer 41 to increase the contact area between the first sealing section 71 and the light control sheet 1. This makes it possible to increase the peel strength of the first sealing section 71. The first sealing section 71 then covers the first outer surface 40S to increase the contact area between the first sealing section 71 and the light control sheet 1, making it possible to further increase the peel strength of the first sealing section 71.

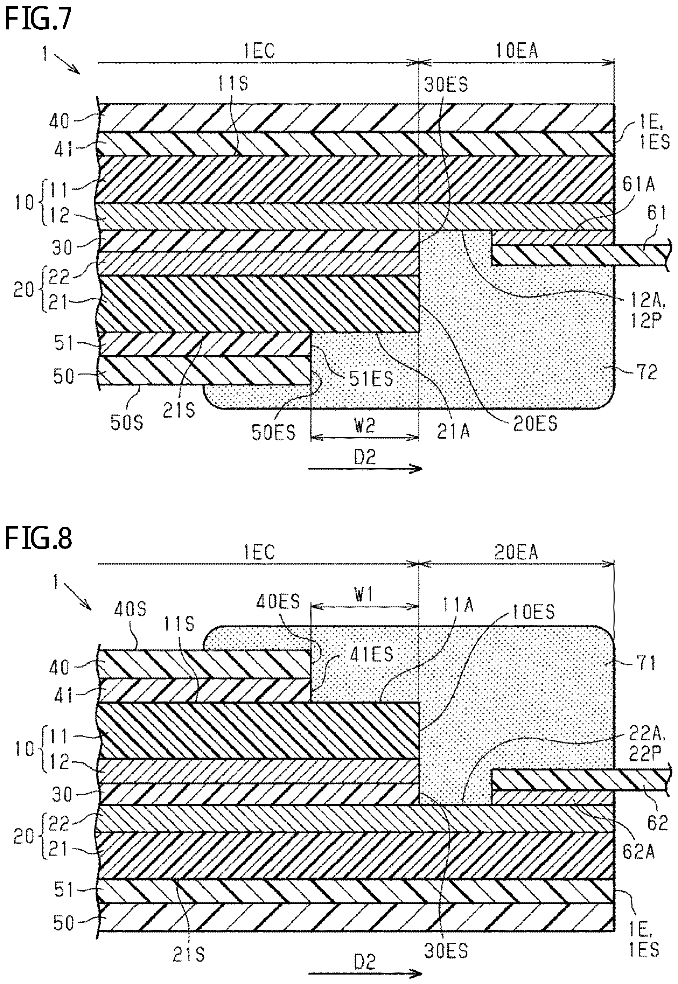

As illustrated in Fig. 7, the first non-driver section 10EA includes the first electrode sheet 10 and the first adherend layer 40. The first electrode surface 12A of the first non-driver section 10EA is a portion of the surface of the first transparent electrode layer 12 in contact with the light control layer 30. The portion is positioned closer to the outside of the light control sheet 1 than the second substrate surface 21A is and exposed from the light control layer 30.

The second electrode sheet 20 has an end face 20ES that defines the first non-driver section 10EA. In one example, on the boundary between the first non-driver section 10EA and the driver section 1EC, the end face 20ES of the second electrode sheet 20 and the end face 30ES of the light control layer 30 form one end face. The second adherend layer 50 has an end face 50ES in the second adhering surface 21S. The end face 50ES defines the second substrate surface 21A. The end face 50ES of the second adherend layer 50 is an example of an end face for defining the second substrate surface. The end face 50ES of the second adherend layer 50 and an end face 51ES of the second adhesive layer 51 form one end face.

In one example, it is preferable that width W2 of the second substrate surface 21A in the second direction D2 be greater than or equal to 0.1 mm in the edge section 1E. It is to be noted that the width W2 corresponds to the distance between the end face 50ES of the second adherend layer 50 and the end face 20ES of the second electrode sheet 20 in the direction orthogonal to the direction in which the second substrate surface 21A extends.

In a cross section that is orthogonal to the second adhering surface 21S and includes the second substrate surface 21A and the first electrode surface 12A, the outer peripheral end face 1ES of the light control sheet 1 is formed by the first electrode sheet 10 and the first adherend layer 40 in one example. In the cross section, the end face 20ES of the second electrode sheet 20 and the end face 30ES of the light control layer 30 are positioned further inside the light control sheet 1 than the outer peripheral end face 1ES is. In the cross section, the end face 50ES of the second adherend layer 50 and the end face 51ES of the second adhesive layer 51 are positioned further inside the light control sheet 1 than the end face 20ES of the second electrode sheet 20 is.

The boundary between the driver section 1EC and the first non-driver section 10EA is provided with the second sealing section 72. The second sealing section 72 is a resin having insulating properties. In one example, the second sealing section 72 is formed by using an epoxy resin, an acryl-based resin, or the like. The second sealing section 72 covers the first electrode surface 12A, and the end face 20ES of the second electrode sheet 20 and the end face 30ES of the light control layer 30 in the driver section 1EC. The second sealing section 72 then covers the end face 50ES of the second adherend layer 50 and the end face 51ES of the second adhesive layer 51 to extend up onto the second substrate surface 21A. Further, the second sealing section 72 covers part of a second outer surface 50S of the second adherend layer 50 opposite to the surface in contact with the second adhesive layer 51. In other words, the second sealing section 72 is in contact with the first electrode surface 12A, and the end face 20ES of the second electrode sheet 20, the end face 30ES of the light control layer 30, the second substrate surface 21A, the end face 50ES of the second adherend layer 50, the end face 51ES of the second adhesive layer 51, and the part of the second outer surface 50S in the driver section 1EC. The whole of the periphery of the end face 30ES of the light control layer 30 is covered with any of the first sealing section 71 and the second sealing section 72.

The second sealing section 72 covers the second substrate surface 21A and the end face 50ES of the second adherend layer 50 to increase the contact area between the second sealing section 72 and the light control sheet 1, making it possible to increase the peel strength of the second sealing section 72. Further, the second sealing section 72 covers the second outer surface 50S to increase the contact area between the second sealing section 72 and the light control sheet 1, making it possible to further increase the peel strength of the second sealing section 72.

The outer peripheral ends of the first sealing section 71 and the second sealing section 72 each have the same position as the position of the outer peripheral end face 1ES of the light control sheet 1 or are each positioned inside the outer peripheral end face 1ES. If the first sealing section 71 and the second sealing section 72 are each provided outside the outer peripheral end face 1ES of the light control sheet 1, the sealing section positioned outside the outer peripheral end face 1ES easily becomes caught during attachment of the light control sheet 1 or the like and easily causes peeling. In this regard, the second non-driver section 20EA provided around the driver section 1EC is provided with the first sealing section 71, making it possible to secure contact area necessary to bring the first sealing section 71 and the light control sheet 1 into close contact even without providing the first sealing section 71 outside the outer peripheral end face 1ES of the light control sheet 1. Similarly, the first non-driver section 10EA is provided with the second sealing section 72, making it possible to secure a contact area necessary to bring the second sealing section 72 and the light control sheet 1 into close contact even without providing the second sealing section 72 outside the outer peripheral end face 1ES of the light control sheet 1.

The second adherend layer 50 is disposed to define the second substrate surface 21A in the second transparent substrate 21. This increases the distance between the end face 50ES of the second adherend layer 50 and the end face 51ES of the second adhesive layer 51, and the end face 30ES of the light control layer 30 by the width W2 of the second substrate surface 21A. Thus, even in a case where the second sealing section 72 is provided to cover the second substrate surface 21A, the end face 50ES of the second adherend layer 50, and the end face 51ES of the second adhesive layer 51, it is possible to suppress deterioration of the light control layer 30 due to moisture or acid generated from the second adherend layer 50 and the second adhesive layer 51. If the width W2 of the second substrate surface 21A is greater than or equal to 0.1 mm, it is possible to more reliably suppress deterioration of the light control layer 30 due to moisture or acid generated from the second adherend layer 50 and the second adhesive layer 51.

The first external wiring line 61 is bonded to the first terminal 12P with a first electrically conductive adhesive 61A in between. In one example, the first external wiring line 61 is a flexible printed board (flexible printed circuits (FPCs)). The first electrically conductive adhesive 61A is, for example, at least one selected from the group of an anisotropic electrically conductive film (anisotropic conductive film (ACF)), an anisotropic electrically conductive paste (anisotropic conductive paste (ACP)), an isotropic electrically conductive film (isotropic conductive film (ICF)), and an isotropic electrically conductive paste (isotropic conductive paste (ICP)). It is to be noted that the second sealing section 72 is provided to cover the first external wiring line 61 and the first electrically conductive adhesive 61A.

As illustrated in Fig. 8, the second external wiring line 62 is bonded to the second terminal 22P included in the second non-driver section 20EA with a second electrically conductive adhesive 62A in between. In one example, the second external wiring line 62 is a flexible printed board. It is possible to use, for example, the same type of material for the second electrically conductive adhesive 62A as that of the first electrically conductive adhesive 61A. It is to be noted that the first sealing section 71 is provided to cover the second external wiring line 62 and the second electrically conductive adhesive 62A.

### [Method for Manufacturing Light Control Sheet]

In an example of a method for manufacturing the light control sheet 1, a laminated body is first prepared that includes the first electrode sheet 10, the second electrode sheet 20, and the light control layer 30 between the first electrode sheet 10 and the second electrode sheet 20. For example, the first electrode sheet 10 is drawn from a roll body and the second electrode sheet 20 is drawn from another roll body. A liquid crystal composition including an ultraviolet-curing resin is then applied to the first electrode sheet 10. After that, the second electrode sheet 20 is bonded to the first electrode sheet 10. Subsequently, the liquid crystal composition is irradiated with ultraviolet rays. This forms the light control layer 30 between the first electrode sheet 10 and the second electrode sheet 20. Subsequently, the first adherend layer 40 is bonded to the first adhering surface 11S of the first transparent substrate 11 of the first electrode sheet 10 with the first adhesive layer 41 in between. Further, the second adherend layer 50 is bonded to the second adhering surface 21S of the second transparent substrate 21 of the second electrode sheet 20 with the second adhesive layer 51 in between. The outer shape of the laminated body is then cut such that the respective outer shapes of the first electrode sheet 10, the second electrode sheet 20, the first adherend layer 40, and the second adherend layer 50 match each other. The light control sheet 1 is thus prepared.

Subsequently, part of the first adherend layer 40 is removed by using a cutter along with the first adhesive layer 41 overlapping with the part of the first adherend layer 40. Next, part of the first electrode sheet 10 is removed by using a cutter along with the light control layer 30 overlapping with the part of the first electrode sheet 10. Similarly, part of the second adherend layer 50 is removed by using a cutter along with the second adhesive layer 51 overlapping with the part of the second adherend layer 50. Next, part of the second electrode sheet 20 is removed by using a cutter along with the light control layer 30 overlapping with the part of the second electrode sheet 20.

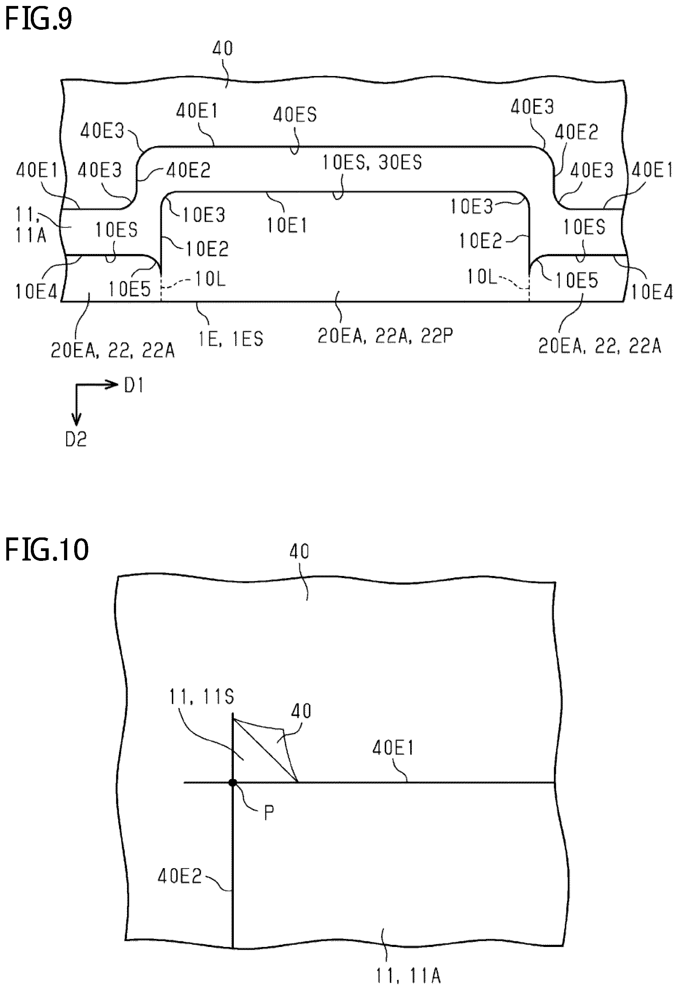

As illustrated in Fig. 9, in the edge section 1E, the first adherend layer 40 is cut such that the end face 40ES of the first adherend layer 40 has a plurality of first sides 40E1, a plurality of second sides 40E2, and a plurality of third sides 40E3 in plan view from a viewpoint facing the light control sheet 1. Each of the first sides 40E1 extends along the first direction D1. Each of the second sides 40E2 extends along the second direction D2. Each of the third sides 40E3 joins an end of one of the first sides 40E1 and an end of one of the second sides 40E2. The third side 40E3 has a curved shape. In one example, the third side 40E3 has an arc shape having a radius of 0.1 mm or more.

In the edge section 1E, the third sides 40E3 extend toward the outer peripheral end face 1ES from the respective ends of the first side 40E1 positioned the furthest inside the light control sheet 1 in the end face 40ES of the first adherend layer 40. Further, the second side 40E2 extends toward the outer peripheral end face 1ES from the end of each of the third sides 40E3. The third sides 40E3 then extend toward the outer peripheral end face 1ES from the ends of the respective second sides 40E2 to increase the distance between the third sides 40E3. The first side 40E1 then extends from the end of each of the third sides 40E3.

In the edge section 1E, the plurality of first sides 40E1, the plurality of second sides 40E2, and the plurality of third sides 40E3 form one continuous curved shape. In the edge section 1E, the plurality of first sides 40E1, the plurality of second sides 40E2, and the plurality of third sides 40E3 are formed by being continuously cut at one time. After the first adherend layer 40 is cut by a cutter, the portion defined by the respective sides that form the end face 40ES and the outer peripheral end face 1ES is peeled off from the first transparent substrate 11 along with the first adhesive layer 41.

If the first side 40E1 and the second side 40E2 are joined without the third side 40E3 in between as illustrated in Fig. 10, the first adherend layer 40 is sometimes cut such that the first side 40E1 and the second side 40E2 extend outside an intersection P depending on processing accuracy. In this case, the corner section positioned around the intersection P in the first adherend layer 40 is easier to peel off from the intersection P. Even the portion of the first adherend layer 40 that is not originally peeled off may be thus peeled off from the first transparent substrate 11.

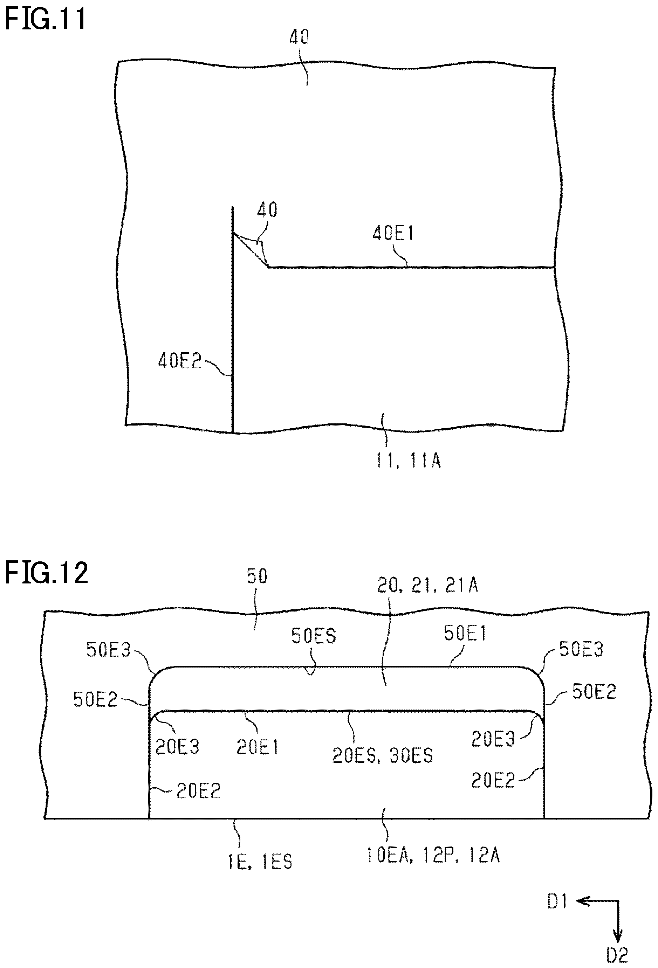

If the first side 40E1 and the second side 40E2 are joined without the third side 40E3 in between as illustrated in Fig. 11, the first adherend layer 40 is sometimes cut with the first side 40E1 and the second side 40E2 apart from each other instead of crossing each other depending on processing accuracy. For example, Fig. 11 exemplifies a case where the first adherend layer 40 is cut with the first side 40E1 not reaching the second side 40E2. In this case, a portion of the first adherend layer 40 that is necessary to be peeled off and a portion of the first adherend layer 40 that is not originally peeled off are not cut, but joined between the first side 40E1 and the second side 40E2. Therefore, when the portion of the first adherend layer 40 that is necessary to be peeled off is peeled off, even the portion of the first adherend layer 40 that is not originally peeled off may also be torn off from the first transparent substrate 11. It is to be noted that the peeling mode illustrated in each of Figs. 10 and 11 is likely to occur in a case where the adhesion brought about between the first adhering surface 11S and the first adherend layer 40 by the first adhesive layer 41 is greater than the tear strength of the first adherend layer 40.

In this regard, as illustrated in Fig. 9, the first side 40E1 and the second side 40E2 extending in the directions crossing each other are joined by the third side 40E3 having a curved shape in the present embodiment. This makes it possible to join the first side 40E1 and the second side 40E2 without a shape occurring that easily causes peeling in the end face 40ES of the first adherend layer 40 such as a shape in which the first side 40E1 and the second side 40E2 cross each other. It is thus possible to suppress the peeling of the portion of the first adherend layer 40 that is not originally peeled off. In addition, if the radius of the third side 40E3 is greater than or equal to 0.1 mm, it is possible to easily cut the first side 40E1, the second side 40E2, and the third side 40E3 continuously at one time.

Referring again to Fig. 9, in the edge section 1E, for example, a portion of the first electrode sheet 10 at which the second terminal 22P is exposed in the second non-driver section 20EA and a portion of the first electrode sheet 10 at which a portion other than the second terminal 22P is exposed in the second non-driver section 20EA are separately cut.

For example, the first electrode sheet 10 is first cut to define the second terminal 22P by using the intersection between one of a pair of cut lines 10L illustrated by dashed lines in Fig. 9 and the outer peripheral end face 1ES as a base end and using the intersection between the other of the pair of cut lines 10L and the outer peripheral end face 1ES as a termination end. At this time, the first electrode sheet 10 is cut such that the end face 10ES of the first electrode sheet 10 has a first side 10E1, two second sides 10E2, and two third sides 10E3 in plan view from a viewpoint facing the light control sheet 1. The first side 10E1 extends along the first direction D1. Each of the second sides 10E2 extends along the second direction D2. The third sides 10E3 each join an end of the first side 10E1 and an end of one of the second sides 10E2. Each of the third sides 10E3 has a curved shape. In one example, the third side 10E3 has an arc shape having a radius of 0.1 mm or more. It is to be noted that part of the second side 10E2 overlaps with the cut line 10L.

In the edge section 1E, the first side 10E1, the two second sides 10E2, and the two third sides 10E3 form one continuous curved shape. In the edge section 1E, the first side 10E1, the two second sides 10E2, and the two third sides 10E3 are formed by being continuously cut at one time. It is to be noted that the respective layers of the light control sheet 1 are cut to a depth to which the first electrode sheet 10 is cut and the second transparent electrode layer 22 is not cut in the thickness direction of the light control sheet 1 in the step of cutting the first electrode sheet 10 when the second terminal 22P is defined. This prevents disconnection between the second terminal 22P and the driver section 1EC.

Subsequently, the first electrode sheet 10 is cut to define the second non-driver section 20EA other than the second terminal 22P. At this time, the first electrode sheet 10 is cut such that the end face 10ES of the first electrode sheet 10 has a fourth side 10E4 and a fifth side 10E5 and includes the cut line 10L on the cutting path in plan view from a viewpoint facing the light control sheet 1. The fourth side 10E4 extends along the first direction D1. The fifth side 10E5 has a curved shape. In one example, the fifth side 10E5 has an arc shape having a radius of 0.1 mm or more. The fifth side 10E5 joins the fourth side 10E4 and the cut line 10L.

In the edge section 1E, the fourth side 10E4 and the fifth side 10E5 form one continuous curved shape. It is to be noted that, when the second non-driver section 20EA other than the second terminal 22P is defined, the second transparent electrode layer 22 may be cut or the second transparent electrode layer 22 does not have to be cut in the step of cutting the first electrode sheet 10 as long as the first electrode sheet 10 is cut.

After the first electrode sheet 10 is cut by a cutter, the portion of the first electrode sheet 10 positioned between each of the sides included in the end face 10ES and the outer peripheral end face 1ES is peeled off from the second transparent electrode layer 22 along with the light control layer 30. This exposes the second electrode surface 22A in the second non-driver section 20EA. At this time, the first electrode sheet 10 is removed at the position of the cut line 10L. The end of the second side 10E2 and the end of the fifth side 10E5 are therefore joined.

Joining the first side 10E1 and the second side 10E2 extending in the directions crossing each other by the third side 10E3 having a curved shape makes it possible to suppress unintentional peeling at the portion of the first electrode sheet 10 that is not originally peeled off even when the first electrode sheet 10 is peeled off. In addition, if the radius of the third side 10E3 is greater than or equal to 0.1 mm, it is possible to easily cut the first side 10E1, the second side 10E2, and the third side 10E3 continuously at one time.

As illustrated in Fig. 12, the second adherend layer 50 is cut such that the end face 50ES of the second adherend layer 50 has a first side 50E1, two second sides 50E2, and two third sides 50E3 in plan view from a viewpoint facing the light control sheet 1. The first side 50E1 extends along the first direction D1. Each of the second sides 50E2 extends along the second direction D2. Each of the third sides 50E3 joins an end of the first side 50E1 and an end of one of the second sides 50E2. Each of the third sides 50E3 has a curved shape. In one example, the third side 50E3 has an arc shape having a radius of 0.1 mm or more.

The pair of second sides 50E2 extends toward the inside of the light control sheet 1 from the outer peripheral end face 1ES along the second direction D2 on the end face 50ES of the second adherend layer 50. Further, the third sides 50E3 extend toward the inside of the light control sheet 1 and closer to each other from ends of the respective second sides 50E2. The first side 50E1 then extends along the first direction D1 to join the ends of the respective third sides 50E3.

The first side 50E1, the two second sides 50E2, and the two third sides 50E3 form one continuous curved shape. The first side 50E1, the two second sides 50E2, and the two third sides 50E3 are continuously cut at one time. After the second adherend layer 50 is cut by a cutter, the portion defined by the respective sides that form the end face 50ES and the outer peripheral end face 1ES is peeled off from the second transparent substrate 21 along with the second adhesive layer 51.

As with the first adherend layer 40, joining the first side 50E1 and the second side 50E2 extending in the directions crossing each other by the third side 50E3 having a curved shape makes it possible to suppress peeling of the portion of the second adherend layer 50 that is not originally peeled off. In addition, if the radius of the third side 50E3 is greater than or equal to 0.1 mm, it is possible to easily cut the first side 50E1, the second side 50E2, and the third side 50E3 continuously at one time.

For example, the second electrode sheet 20 is cut such that the end face 20ES of the second electrode sheet 20 has a first side 20E1, two second sides 20E2, and two third sides 20E3 in plan view from a viewpoint facing the light control sheet 1. The first side 20E1 extends along the first direction D1. Each of the second sides 20E2 extends along the second direction D2. Each of the third sides 20E3 joins an end of the first side 20E1 and an end of one of the second sides 20E2. Each of the third sides 20E3 has a curved shape. In one example, the third side 20E3 has an arc shape having a radius of 0.1 mm or more.

The pair of second sides 20E2 extends from the outer peripheral end face 1ES toward the inside of the light control sheet 1 along the second direction D2 on the end face 20ES of the second electrode sheet 20. In plan view from a viewpoint facing the light control sheet 1, the second side 20E2 of the end face 20ES of the second electrode sheet 20 overlaps with the one second side 50E2 of the end face 50ES of the second adherend layer 50. The second side 20E2 is shorter than the second side 50E2. Further, the third sides 20E3 extend toward the inside of the light control sheet 1 from the ends of the respective second sides 20E2 to decrease the distance between the third sides 20E3. The first side 20E1 then extends along the first direction D1 to join the ends of the respective third sides 20E3.

The first side 20E1, the two second sides 20E2, and the two third sides 20E3 form one continuous curved shape. The first side 20E1, the two second sides 20E2, and the two third sides 20E3 are continuously cut at one time. After the second electrode sheet 20 is cut by a cutter, the portion of the second electrode sheet 20 defined by each of the sides that form the end face 20ES and the outer peripheral end face 1ES is peeled off from the first transparent electrode layer 12 along with the light control layer 30.

As with the first adherend layer 40, joining the first side 20E1 and the second side 20E2 extending in the directions crossing each other by the third side 20E3 having a curved shape makes it possible to suppress the peeling of the portion of the second electrode sheet 20 that is not originally peeled off. In addition, if the radius of the third side 20E3 is greater than or equal to 0.1 mm, it is possible to easily cut the first side 20E1, the second side 20E2, and the third side 20E3 continuously at one time.

The first external wiring line 61 and the second external wiring line 62 are attached to the light control sheet 1 configured as described above. After that, the first sealing section 71 and the second sealing section 72 cover the whole of the end face 30ES of the light control layer 30.

### [Advantages of Embodiment]

According to the embodiment described above, it is possible to obtain advantages listed below.
(1) The first adherend layer 40 is disposed to define the first substrate surface 11A on the first adhering surface 11S. This increases the distance between the end face 40ES of the first adherend layer 40 and the end face 41ES of the first adhesive layer 41, and the end face 30ES of the light control layer 30 by the width W1 of the first substrate surface 11A. Thus, even in a case where the first sealing section 71 is provided to cover the first substrate surface 11A, the end face 40ES of the first adherend layer 40, and the end face 41ES of the first adhesive layer 41, it is possible to suppress deterioration of the light control layer 30 due to moisture or acid generated from the first adherend layer 40 and the first adhesive layer 41. Similarly, the second adherend layer 50 is disposed to define the second substrate surface 21A on the second adhering surface 21S. This makes it possible to suppress deterioration of the light control layer 30 due to moisture or acid generated from the second adherend layer 50 and the second adhesive layer 51.
(2) Setting the width W1 of the first substrate surface 11A to 0.1 mm or more makes it possible to favorably suppress the deterioration of the light control layer 30 due to moisture or acid generated from the first adherend layer 40 and the first adhesive layer 41. Similarly, setting the width W2 of the second substrate surface 21A to 0.1 mm or more makes it possible to favorably suppress deterioration of the light control layer 30 due to moisture or acid generated from the second adherend layer 50 and the second adhesive layer 51.
(3) Joining the first side 40E1 and the second side 40E2 by the third side 40E3 having a curved shape in plan view from a viewpoint facing the light control sheet 1 makes it possible to suppress peeling of the portion of the first adherend layer 40 that is not originally peeled off. It is to be noted that adopting similar configurations for the end face 10ES of the first electrode sheet 10, the end face 20ES of the second electrode sheet 20, and the end face 50ES of the second adherend layer 50 offers similar advantages.
(4) Setting the radius of the third side 40E3 to 0.1 mm or more makes it possible to easily cut the first side 40E1, the second side 40E2, and the third side 40E3 continuously at one time. It is to be noted that adopting similar configurations for the end face 10ES of the first electrode sheet 10, the end face 20ES of the second electrode sheet 20, and the end face 50ES of the second adherend layer 50 offers similar advantages.

### [Modification Examples]

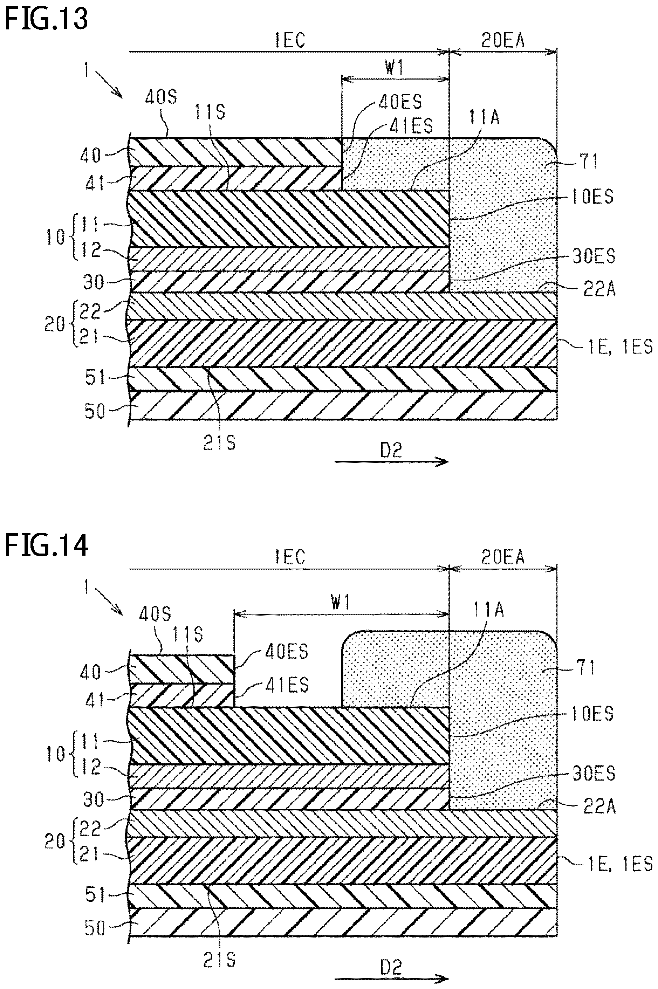

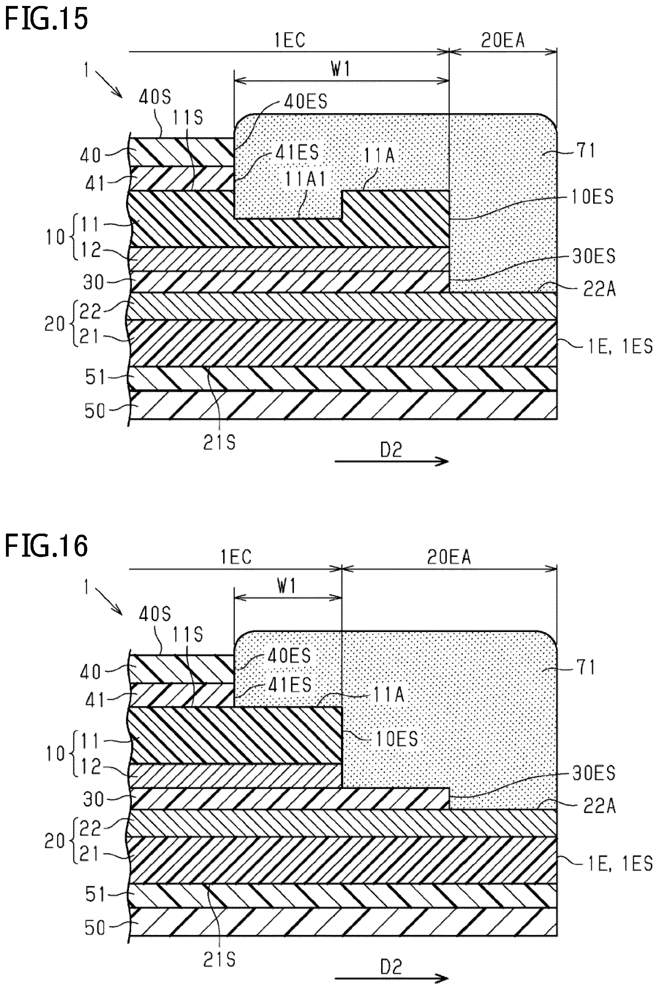

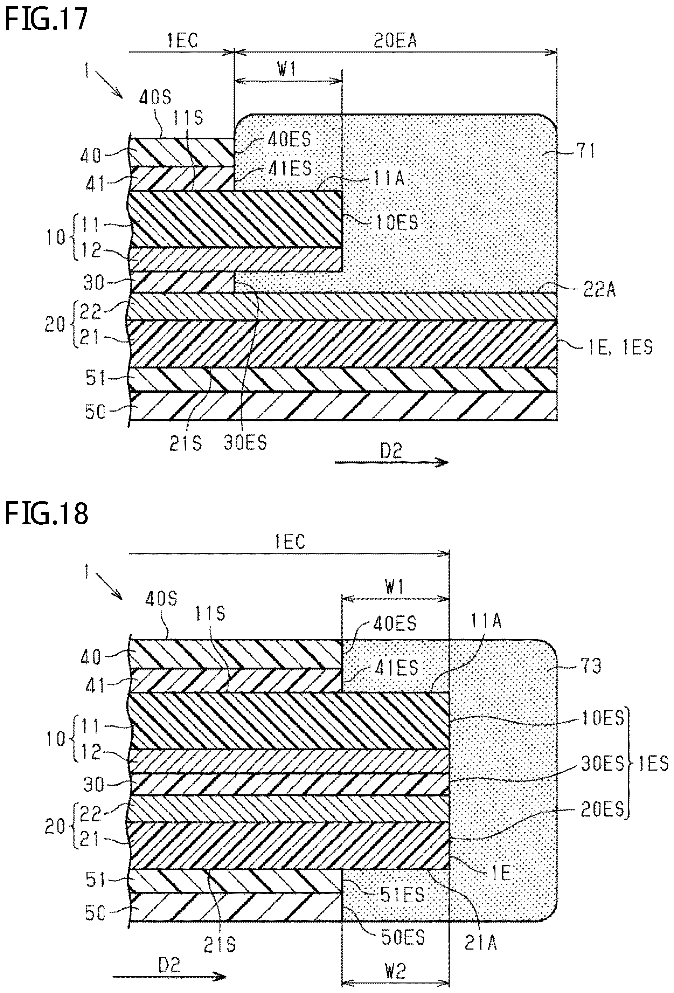

Additionally, it is possible to modify and carry out the embodiment described above as follows. In addition, it is possible to combine the following modification examples within the scope within which technical inconsistency is avoided.
- As illustrated in Fig. 13, for example, in a case where it is necessary to decrease the thickness of the light control sheet 1 including the first sealing section 71 or make the thickness uniform, the first sealing section 71 does not have to be positioned on the first outer surface 40S. In this case, it is preferable that the first sealing section 71 cover the first substrate surface 11A and the end face 40ES of the first adherend layer 40 to increase the peel strength. Similarly, in a case where it is necessary to decrease the thickness of the light control sheet 1 including the second sealing section 72 or make the thickness uniform, the second sealing section 72 does not have to be positioned on the second outer surface 50S. In this case, it is preferable that the second sealing section 72 cover the second substrate surface 21A and the end face 50ES of the second adherend layer 50 to increase the peel strength.
- For example, in a case where it is possible to sufficiently secure the contact area between the first sealing section 71 and the light control sheet 1 such as a case where the first substrate surface 11A as illustrated in Fig. 14 has the sufficiently great width W1, the first sealing section 71 does not have to cover the end face 40ES of the first adherend layer 40. In this case, moisture or acid generated from the first adherend layer 40 and the first adhesive layer 41 is easier to emit to the outside. This makes the light control layer 30 less likely to deteriorate. Similarly, the second sealing section 72 does not have to cover the end face 50ES of the second adherend layer 50.
- As illustrated in Fig. 15, part of the first substrate surface 11A may have a recessed section 11A1 that is recessed in the thickness direction. In this case, the contact area increases between the first sealing section 71 and the light control sheet 1, and the first sealing section 71 with which the recessed section 11A1 is filled functions as an anchor, which makes it possible to increase the peel strength of the first sealing section 71. It is to be noted that the second substrate surface 21A may have a configuration similar to that of the recessed section 11A1.
- As illustrated in Fig. 16, if covered with the first sealing section 71, the end face 30ES of the light control layer 30 may extend further into the second non-driver section 20EA than the end face 10ES of the first electrode sheet 10. Similarly, if covered with the second sealing section 72, the end face 30ES of the light control layer 30 may extend further into the first non-driver section 10EA than the end face 20ES of the second electrode sheet 20.
- As illustrated in Fig. 17, the end face 10ES of the first electrode sheet 10 may extend further into the second non-driver section 20EA than the end face 30ES of the light control layer 30. In this case, the distance increases between the end face 30ES of the light control layer 30, and the end face 40ES of the first adherend layer 40 and the end face 41ES of the first adhesive layer 41. The light control layer 30 is thus less likely to deteriorate due to moisture or acid generated from the first adherend layer 40 and the first adhesive layer 41. Similarly, the end face 20ES of the second electrode sheet 20 may extend further into the first non-driver section 10EA than the end face 30ES of the light control layer 30.
- As illustrated in Fig. 18, the driver section 1EC may be positioned on the outer peripheral end face 1ES in a portion of the outer peripheral portion of the light control sheet 1 other than the first terminal 12P and the second terminal 22P. For example, the end faces of the respective layers that form the driver section 1EC may form the outer peripheral end face 1ES in the portion of the edge section 1E other than the first terminal 12P and the second terminal 22P. In this case, in plan view from a viewpoint facing the light control sheet 1, the first substrate surface 11A is positioned between the outer peripheral end face 1ES and the first adherend layer 40 in the portion of the edge section 1E other than the first terminal 12P and the second terminal 22P. In addition, the second substrate surface 21A is positioned between the outer peripheral end face 1ES and the second adherend layer 50.

The outer peripheral end face 1ES formed by the driver section 1EC is provided with a sealing section 73. The sealing section 73 covers the outer peripheral end face 1ES formed by the driver section 1EC, the first substrate surface 11A, and the second substrate surface 21A. That is, the sealing section 73 is disposed across the driver section 1EC in the thickness direction. This makes it possible to secure the peel strength of the sealing section 73. It is thus possible to suppress a peeling mode in which the sealing section 73 positioned further outside the light control sheet 1 than the outer peripheral end face 1ES is peeled off from the outer peripheral end face 1ES. In addition, in a case where the sealing section 73 has sufficiently great peel strength, the sealing section 73 does not have to cover the end face 40ES of the first adherend layer 40 and the end face 41ES of the first adhesive layer 41 and does not have to cover the end face 50ES of the second adherend layer 50 and the end face 51ES of the second adhesive layer 51.

It is to be noted that the sealing section 73 may cover the end face 40ES of the first adherend layer 40 and the end face 41ES of the first adhesive layer 41. The sealing section 73 may cover the end face 50ES of the second adherend layer 50 and the end face 41ES of the second adhesive layer 51. Even in this case, it is possible to obtain advantages equivalent to those of (1) above. The sealing section 73 may be in contact with the end face 40ES of the first adherend layer 40 and the end face 41ES of the first adhesive layer 41 or does not have to be in contact with the end face 40ES of the first adherend layer 40 and the end face 41ES of the first adhesive layer 41. In addition, the sealing section 73 may be in contact with the end face 50ES of the second adherend layer 50 and the end face 51ES of the second adhesive layer 51 or does not have to be in contact with the end face 50ES of the second adherend layer 50 and the end face 51ES of the second adhesive layer 51.
- The shape of the third side 40E3 is not limited as long as the shape allows the first side 40E1 and the second side 40E2 extending in the directions crossing each other to be joined and allows the first side 40E1, the second side 40E2, and the third side 40E3 to be continuously cut at one time. For example, the third side 40E3 may have an arc shape having a radius of less than 0.1 mm. For example, the third side 40E3 may have any curved shape other than an arc shape. Additionally, it is also possible to make similar modifications for the end face 10ES of the first electrode sheet 10, the end face 20ES of the second electrode sheet 20, and the end face 50ES of the second adherend layer 50.
- The first side 40E1 may extend in a direction other than the first direction D1 as long as the direction is a direction crossing the direction in which the second side 40E2 extends. The second side 40E2 may extend in a direction other than the second direction D2 as long as the direction is a direction crossing the direction in which the first side 40E1 extends. Additionally, it is also possible to make similar modifications for the end face 10ES of the first electrode sheet 10, the end face 20ES of the second electrode sheet 20, and the end face 50ES of the second adherend layer 50.
- For example, if it is possible to continuously cut the first side 40E1 and the second side 40E2 at one time through laser processing or the like without the third side 40E3 in between, a configuration may be adopted in which the third side 40E3 is not provided and the first side 40E1 and the second side 40E2 are directly joined. For example, in the case of a configuration in which a plurality of corner sections of the four corner sections defined by the intersection P between the first side 40E1 and the second side 40E2 in the first adherend layer 40 is peeled off, the third side 40E3 does not have to be provided. For example, in the case of a configuration in which the peeling mode illustrated in each of Figs. 10 and 11 is less likely to occur such as a case where the adhesion brought about between the first adhering surface 11S and the first adherend layer 40 by the first adhesive layer 41 is lower than the tear strength of the first adherend layer 40, the third side 40E3 does not have to be provided.
- For example, in a case where the end face 40ES of the first adherend layer 40 and the end face 41ES of the first adhesive layer 41, and the end face 30ES of the light control layer 30 have sufficiently great distance such as a case where the first electrode sheet 10 has great thickness, the width W1 of the first substrate surface 11A may be less than 0.1 mm. Similarly, the width W2 of the second substrate surface 21A may be less than 0,1 mm.
- The first sealing section 71 and the second sealing section 72 do not have to be provided to the light control sheet 1. For example, in a case where caulking is performed when the light control sheet 1 is attached to an attachment target such as a window glass or other cases, the first sealing section 71 and the second sealing section 72 are not provided and the end face 30ES of the light control layer 30 may be covered with a caulking agent. Even in this case, it is possible to obtain advantages equivalent to those of (1) above.
- The light control sheet 1 may include one of the first adherend layer 40 and the second adherend layer 50 alone. In addition, the first adherend layer 40 and the second adherend layer 50 may be functional layers that are different from each other in type. For example, the first adherend layer 40 may be a hard coat layer and the second adherend layer 50 may be an ultraviolet shielding layer.
- The first adherend layer 40 and the first adhering surface 11S may be bonded by means other than the first adhesive layer 41. For example, the first adherend layer 40 may be bonded to the first adhering surface 11S by thermal welding. In this case, the light control sheet 1 does not have to include the first adhesive layer 41. Similarly, the second adherend layer 50 and the second adhering surface 21S may be bonded by means other than the second adhesive layer 51. The light control sheet 1 does not have to include the second adhesive layer 51.
- The light control sheet 1 is not limited to a rectangular shape and may have a geometric shape such as a polygonal shape, a circular shape, or an elliptical shape other than the rectangular shape, or an indefinite shape other than the geometric shape. The light control sheet 1 is not limited to a two-dimensional planar shape and may have a curved shape such as a cylindrical shape, a spherical shape, or a corrugated shape.

## Claims

1. A light control sheet (1) comprising:
a first electrode sheet (10) including a first transparent substrate (11) and a first transparent electrode layer (12), the first transparent substrate (11) having a first surface in contact with the first transparent electrode layer (12) and a second surface opposite to the first surface;
a second electrode sheet (20) including a second transparent substrate (21) and a second transparent electrode layer (22); a light control layer (30) that is positioned between the first transparent electrode layer (12) and the second transparent electrode layer (22); and
an adherend layer (40) that is bonded to the second surface of the first transparent substrate (11), wherein
in plan view from a viewpoint facing the light control sheet (1),
a substrate surface (11A) that is part of the second surface of the first transparent substrate (11) is exposed from the adherend layer (40), and a sealing section (71) is provided to cover an end face of the light control layer (30), the substrate surface (11A), and an end face of the adherend layer (40) in an edge section of the light control sheet (1), **characterized in that**
in plan view from a viewpoint facing the light control sheet (1), the second transparent electrode layer (22) has a first surface in contact with the light control layer (30), and an electrode surface (22A) that is part of the first surface of the second transparent electrode layer (22) is exposed from the first transparent substrate (11) and exposed from the light control layer (30), and the sealing section (71) covers the electrode surface (22A).

2. The light control sheet (1) according to claim 1, wherein
in plan view from the viewpoint facing the light control sheet (1),
the substrate surface (11A) and the electrode surface (22A) extend along a first direction (D1), and width of the substrate surface (11A) in a second direction (D2) orthogonal to the first direction (D1) is greater than or equal to 0.1 mm.

3. The light control sheet (1) according to claim 1 or 2, wherein
in plan view from the viewpoint facing the light control sheet (1), an end face of the adherend layer (40) that defines the substrate surface (11A) on the second surface of the first transparent substrate (11) has a first side (40E1), a second side (40E2) that extends in a direction crossing the first side (40E1), and a third side (40E3) that joins the first side (40E1) and the second side (40E2), and the third side (40E3) has a curved shape.

4. The light control sheet (1) according to claim 3, wherein
the third side (40E3) has an arc shape having a radius of 0.1 mm or more in plan view from the viewpoint facing the light control sheet (1).

5. A light control sheet (1) comprising:
a first electrode sheet (10) including a first transparent substrate (11) and a first transparent electrode layer (12), the first transparent substrate (11) having a first surface in contact with the first transparent electrode layer (12) and a second surface opposite to the first surface;
a second electrode sheet (20) including a second transparent substrate (21) and a second transparent electrode layer (22); a light control layer (30) that is positioned between the first transparent electrode layer (12) and the second transparent electrode layer (22); and
an adherend layer (40) that is bonded to the second surface of the first transparent substrate (11), wherein
in plan view from a viewpoint facing the light control sheet (1),
a substrate surface (11A) that is part of the second surface of the first transparent substrate (11) is exposed from the adherend layer (40), and the substrate surface (11A) extends along a first direction (D1) in an edge section of the light control sheet (1), **characterized in that**
in plan view from a viewpoint facing the light control sheet (1), the second transparent electrode layer (22) has a first surface in contact with the light control layer (30), and an electrode surface (22A) that is part of the first surface of the second transparent electrode layer (22) is exposed from the first transparent substrate (11) and exposed from the light control layer (30), and the electrode surface (22A) extends along a first direction (D1) in an edge section of the light control sheet (1), and width of the substrate surface (11A) in a second direction (D2) orthogonal to the first direction (D1) is greater than or equal to 0.1 mm.

## Patentansprüche

1. Lichtsteuerungsfolie (1) umfassend:
eine erste Elektrodenfolie (10), die ein erstes transparentes Substrat (11) und eine erste transparente Elektrodenschicht (12) aufweist, wobei das erste transparente Substrat (11) eine erste Oberfläche in Kontakt mit der ersten transparenten Elektrodenschicht (12) und eine der ersten Oberfläche gegenüberliegende zweite Oberfläche hat;
eine zweite Elektrodenfolie (20), die ein zweites transparentes Substrat (21) und eine zweite transparente Elektrodenschicht (22) aufweist;
eine Lichtsteuerungsschicht (30), die zwischen der ersten transparenten Elektrodenschicht (12) und der zweiten transparenten Elektrodenschicht (22) positioniert ist; und
eine Haftschicht (40), die an die zweite Oberfläche des ersten transparenten Substrats (11) gebunden ist, wobei
in einer Draufsicht aus einem der Lichtsteuerungsfolie (1) zugewandten Blickwinkel
eine Substratoberfläche (11A), die Teil der zweiten Oberfläche des ersten transparenten Substrats (11) ist, von der Haftschicht (40) freiliegt, und ein Dichtungsabschnitt (71) vorgesehen ist, um eine Endfläche der Lichtsteuerungsschicht (30), die Substratoberfläche (11A), und eine Endfläche der Haftschicht (40) in einem Randbereich der Lichtsteuerungsfolie (1) abzudecken, **dadurch gekennzeichnet, dass**
in einer Draufsicht aus einem der Lichtsteuerungsfolie (1) zugewandten Blickwinkel die zweite transparente Elektrodenschicht (22) eine erste Oberfläche in Kontakt mit der Lichtsteuerungsschicht (30) hat, und eine Elektrodenoberfläche (22A), die Teil der ersten Oberfläche der zweiten transparenten Elektrodenschicht (22) ist, von dem ersten transparenten Substrat (11) freiliegt und von der Lichtsteuerungsschicht (30) freiliegt, und der Dichtungsabschnitt (71) die Elektrodenoberfläche (22A) abdeckt.

2. Lichtsteuerungsfolie (1) gemäß Anspruch 1, wobei
in einer Draufsicht aus dem der Lichtsteuerungsfolie (1) zugewandten Blickwinkel
die Substratoberfläche (11A) und die Elektrodenoberfläche (22A) sich entlang einer ersten Richtung (D1) erstrecken, und eine Breite der Substratoberfläche (11A) in einer zweiten Richtung (D2), die orthogonal zur ersten Richtung (D1) ist, größer oder gleich 0,1 mm ist.

3. Lichtsteuerungsfolie (1) gemäß Anspruch 1 oder 2, wobei
in einer Draufsicht aus dem der Lichtsteuerungsfolie (1) zugewandten Blickwinkel eine Endfläche der Haftschicht (40), die die Substratoberfläche (11A) auf der zweiten Oberfläche des ersten transparenten Substrats (11) definiert, eine erste Seite (40E1), eine zweite Seite (40E2), die sich in einer Richtung erstreckt, die die erste Seite (40E1) kreuzt, und eine dritte Seite (40E3), die die erste Seite (40E1) und die zweite Seite (40E2) verbindet, hat, und die dritte Seite (40E3) eine gekrümmte Form hat.

4. Lichtsteuerungsfolie (1) gemäß Anspruch 3, wobei
die dritte Seite (40E3) in einer Draufsicht aus dem der Lichtsteuerungsfolie (1) zugewandten Blickwinkel eine Bogenform mit einem Radius von 0,1 mm oder mehr hat.

5. Lichtsteuerungsfolie (1) umfassend:
eine erste Elektrodenfolie (10), die ein erstes transparentes Substrat (11) und eine erste transparente Elektrodenschicht (12) aufweist, wobei das erste transparente Substrat (11) eine erste Oberfläche in Kontakt mit der ersten transparenten Elektrodenschicht (12) und eine der ersten Oberfläche gegenüberliegende zweite Oberfläche hat;
eine zweite Elektrodenfolie (20), die ein zweites transparentes Substrat (21) und eine zweite transparente Elektrodenschicht (22) aufweist;
eine Lichtsteuerungsschicht (30), die zwischen der ersten transparenten Elektrodenschicht (12) und der zweiten transparenten Elektrodenschicht (22) positioniert ist; und
eine Haftschicht (40), die an die zweite Oberfläche des ersten transparenten Substrats (11) gebunden ist, wobei
in einer Draufsicht aus einem der Lichtsteuerungsfolie (1) zugewandten Blickwinkel
eine Substratoberfläche (11A), die Teil der zweiten Oberfläche des ersten transparenten Substrats (11) ist, von der Haftschicht (40) freiliegt, und die Substratoberfläche (11A) sich entlang einer ersten Richtung (D1) in einem Randbereich der Lichtsteuerungsfolie (1) erstreckt, **dadurch gekennzeichnet, dass**
in einer Draufsicht aus einem der Lichtsteuerungsfolie (1) zugewandten Blickwinkel die zweite transparente Elektrodenschicht (22) eine erste Oberfläche in Kontakt mit der Lichtsteuerungsschicht (30) hat, und eine Elektrodenoberfläche (22A), die Teil der ersten Oberfläche der zweiten transparenten Elektrodenschicht (22) ist, von dem ersten transparenten Substrat (11) freiliegt und von der Lichtsteuerungsschicht (30) freiliegt, und die Elektrodenoberfläche (22A) sich entlang einer ersten Richtung (D1) in einem Randbereich der Lichtsteuerungsfolie (1) erstreckt, und eine Breite der Substratoberfläche (11A) in einer zweiten Richtung (D2), die orthogonal zur ersten Richtung (D1) ist, größer oder gleich 0,1 mm ist.

## Revendications

1. Feuille de contrôle de la lumière (1) comprenant :
une première feuille d'électrode (10) comprenant un premier substrat transparent (11) et une première couche d'électrode transparente (12), le premier substrat transparent (11) présentant une première surface en contact avec la première couche d'électrode transparente (12) et une deuxième surface opposée à la première surface ;
une deuxième feuille d'électrode (20) comprenant un deuxième substrat transparent (21) et une deuxième couche d'électrode transparente (22) ;
une couche de contrôle de la lumière (30) positionnée entre la première couche d'électrode transparente (12) et la deuxième couche d'électrode transparente (22) ; et
une couche d'adhérence (40) qui est liée à la deuxième surface du premier substrat transparent (11), dans laquelle
dans une vue en plan depuis un point de vue en face de la feuille de contrôle de la lumière (1),
une surface de substrat (11A), qui fait partie de la deuxième surface du premier substrat transparent (11), est exposée à partir de la couche d'adhérence (40), et une section d'étanchéité (71) est prévue pour recouvrir une face d'extrémité de la couche de contrôle de la lumière (30), la surface de substrat (11A), et une face d'extrémité de la couche d'adhérence (40) dans une section de bord de la feuille de contrôle de la lumière (1), **caractérisée en ce que**
dans une vue en plan depuis un point de vue en face de la feuille de contrôle de la lumière (1), la deuxième couche d'électrode transparente (22) présente une première surface en contact avec la couche de contrôle de la lumière (30), et une surface d'électrode (22A), qui fait partie de la première surface de la deuxième couche d'électrode transparente (22), est exposée à partir du premier substrat transparent (11) et à partir de la couche de contrôle de la lumière (30), et la section d'étanchéité (71) recouvre la surface d'électrode (22A).

2. Feuille de contrôle de la lumière (1) selon la revendication 1, dans laquelle
dans une vue en plan depuis le point de vue en face de la feuille de contrôle de la lumière (1),
la surface de substrat (11A) et la surface d'électrode (22A) s'étendent le long d'une première direction (D1), et une largeur de la surface de substrat (11A) dans une deuxième direction (D2) orthogonale à la première direction (D1) est supérieure ou égale à 0,1 mm.

3. Feuille de contrôle de la lumière (1) selon la revendication 1 ou 2, dans laquelle
dans une vue en plan depuis le point de vue en face de la feuille de contrôle de la lumière (1), une face d'extrémité de la couche d'adhérence (40) qui définit la surface de substrat (11A) sur la deuxième surface du premier substrat transparent (11) présente un premier côté (40E1), un deuxième côté (40E2) s'étendant dans une direction croisant le premier côté (40E1), et un troisième côté (40E3) reliant le premier côté (40E1) et le deuxième côté (40E2), et le troisième côté (40E3) présente une forme courbe.

4. Feuille de contrôle de la lumière (1) selon la revendication 3, dans laquelle
le troisième côté (40E3) présente une forme d'arc ayant un rayon de 0,1 mm ou plus, dans une vue en plan depuis le point de vue en face de la feuille de contrôle de la lumière (1).

5. Feuille de contrôle de la lumière (1) comprenant :
une première feuille d'électrode (10) comprenant un premier substrat transparent (11) et une première couche d'électrode transparente (12), le premier substrat transparent (11) présentant une première surface en contact avec la première couche d'électrode transparente (12) et une deuxième surface opposée à la première surface ;
une deuxième feuille d'électrode (20) comprenant un deuxième substrat transparent (21) et une deuxième couche d'électrode transparente (22) ;
une couche de contrôle de la lumière (30) positionnée entre la première couche d'électrode transparente (12) et la deuxième couche d'électrode transparente (22) ; et
une couche d'adhérence (40) qui est liée à la deuxième surface du premier substrat transparent (11), dans laquelle
dans une vue en plan depuis un point de vue en face de la feuille de contrôle de la lumière (1),
une surface de substrat (11A), qui fait partie de la deuxième surface du premier substrat transparent (11), est exposée à partir de la couche d'adhérence (40), et la surface de substrat (11A) s'étend le long d'une première direction (D1) dans une section de bord de la feuille de contrôle de la lumière (1), **caractérisée en ce que**
dans une vue en plan depuis un point de vue en face de la feuille de contrôle de la lumière (1), la deuxième couche d'électrode transparente (22) présente une première surface en contact avec la couche de contrôle de la lumière (30), et une surface d'électrode (22A), qui fait partie de la première surface de la deuxième couche d'électrode transparente (22), est exposée à partir du premier substrat transparent (11) et à partir de la couche de contrôle de la lumière (30), et la surface d'électrode (22A) s'étend le long d'une première direction (D1) dans une section de bord de la feuille de contrôle de la lumière (1), et une largeur de la surface de substrat (11A) dans une deuxième direction (D2) orthogonale à la première direction (D1) est supérieure ou égale à 0,1 mm.
